(19) Europäisches Patentamt
European Patent Office
Office européen des brevets

(11) **EP 3 894 501 B1**

(12) **EUROPÄISCHE PATENTSCHRIFT**

(45) Veröffentlichungstag und Bekanntmachung des Hinweises auf die Patenterteilung:
**03.07.2024 Patentblatt 2024/27**

(21) Anmeldenummer: **19827644.6**

(22) Anmeldetag: **10.12.2019**

(51) Internationale Patentklassifikation (IPC):
*C09J 7/26* (2018.01)   *C08K 5/00* (2006.01)
*C09J 7/38* (2018.01)   *C09J 11/06* (2006.01)

(52) Gemeinsame Patentklassifikation (CPC):
**C09J 7/26; C09J 7/385;** C09J 2301/124;
C09J 2433/00; C09J 2433/006

(86) Internationale Anmeldenummer:
**PCT/EP2019/084405**

(87) Internationale Veröffentlichungsnummer:
**WO 2020/120465 (18.06.2020 Gazette 2020/25)**

(54) **MEHRSCHICHTIGES KLEBEBAND**

MULTILAYER ADHESIVE TAPE

RUBAN ADHÉSIF MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2018 DE 102018221356**

(43) Veröffentlichungstag der Anmeldung:
**20.10.2021 Patentblatt 2021/42**

(73) Patentinhaber: **tesa SE**
**22848 Norderstedt (DE)**

(72) Erfinder:
• **PRENZEL, Alexander**
**22848 Norderstedt (DE)**

• **LI, Ji**
**22848 Norderstedt (DE)**
• **BEFUSS, Julia**
**22848 Norderstedt (DE)**

(74) Vertreter: **tesa SE**
**Hugo-Kirchberg-Straße 1**
**22848 Norderstedt (DE)**

(56) Entgegenhaltungen:
EP-A2- 2 305 389     WO-A1-2017/140801
WO-A1-2017/207119     WO-A1-2019/229150

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft das technische Gebiet der Klebebänder, wie sie vielfältig zum Verbinden von Bauteilen und Gerätekomponenten eingesetzt werden. Spezifischer betrifft die Erfindung geschäumte Klebebänder mit einer speziell vernetzten Haftklebmasse.

Die Erfindung zielt unter anderem auf den klebtechnisch relevanten Parameter "Benetzung" ab. Darunter wird im Folgenden die Ausbildung einer Grenzfläche zwischen einer Haftklebmasse und dem zu verklebenden Substrat verstanden. Der Begriff "Benetzung" beschreibt somit das Vermögen einer Haftklebmasse, Unebenheiten und/oder Krümmungen der Oberfläche auszugleichen und Luft zwischen sich und dem Substrat zu verdrängen. Je stärker die Benetzung ist, desto besser können sich die Wechselwirkungen zwischen Haftklebmasse und Substrat ausbilden und desto besser werden die Haftung und die Adhäsion. Häufig wird beobachtet, dass insbesondere auf rauen Oberflächen bzw. Oberflächen, die herstellungsbedingt Unebenheiten oder Krümmungen aufweisen oder gewellt sind, durch mechanische Belastungen eine einmal erreichte Benetzung wieder schwächer wird, also eine Entnetzung stattfindet. Die Fähigkeit, einen zur Anpassung an die Oberflächenkonturen einer Klebefläche (die gekrümmt, rau und so weiter sein kann) elastisch verformten flexiblen Gegenstand, typischerweise in Form einer Folie, Kunststoff- oder Metallplatte/ oder Schaumstofffolie/-platte, gegen die ausgeübte Rückstoßkraft unter Rückkehr in seine ursprüngliche Form, zu halten (d. h. eine Fähigkeit, der Rückstoßkraft des Gegenstandes zu widerstehen) wird häufig auch als "Rückstoßwiderstand" ("repulsion resistance") bezeichnet

Weiterhin ist die Benetzung vom Klebkraftaufbau über die Zeit zu unterscheiden. Auch bei einer guten anfänglichen Benetzung kann die Klebkraft mit der Zeit noch ansteigen, da sich immer mehr funktionelle Gruppen, die in der Lage sind, mit der Oberfläche zu wechselwirken, zur Oberfläche hin orientieren.

Für diverse Anwendungsgebiete, wie beispielsweise im Bausektor, in der industriellen Fertigung von technischen Produkten oder für Montagezwecke, werden zunehmend dicke, aber stark klebende Klebebänder (so genannte "Montageklebebänder") benötigt. Da die Verklebungen häufig im Außenbereich stattfinden bzw. die verklebten Produkte den äußeren Witterungseinflüssen ausgesetzt sind, sind die Erwartungen an die Eigenschaften derartiger Klebebänder häufig hoch. So soll die Verklebung stark, dauerhaft und witterungsbeständig sein; gefordert wird vielfach eine hohe Feuchtigkeits-, Wärme- und Feuchtwärmebeständigkeit. Weiterhin sollen die Klebebänder schnell benetzen und dabei Unebenheiten in der Verklebungsfuge bzw. auf den zu verklebenden Untergründen ausgleichen und von Anfang an hohe Klebkräfte (Initialklebkräfte) aufzeigen. Bei der Verwendung von ungeschäumten Klebebändern ergibt sich durch eine gute Benetzung zusätzlich der Vorteil, dass die Verklebung von transparenten Materialien ohne optische Defekte ermöglicht wird, was zunehmend auch für dicke Klebebänder gewünscht wird (etwa im Bereich der Verklebung von transparenten Materialien wie Gläsern oder Transparenz-Kunststoffen).

Die Klebebänder, die für derartige Zwecke eingesetzt werden, sind für gewöhnlich mit Klebmassen ausgerüstet, bei denen die klebtechnischen Eigenschaften sehr gut aufeinander abgestimmt sein müssen. So müssen Kohäsion, Anfassklebrigkeit (auch als "Tack" bezeichnet), Fließverhalten und andere Eigenschaften sehr genau justiert werden. Da die technischen Ausformungen der Haftklebmasse, die diese Eigenschaften beeinflussen, häufig gegenläufige Auswirkungen auf die einzelnen Eigenschaften haben, ist die Abstimmung in der Regel schwierig, oder es müssen Kompromisse im Ergebnis hingenommen werden.

Insbesondere für sehr dicke Klebebänder ist es zudem häufig schwierig, sehr homogene Produkte zu realisieren; verarbeitungsbedingt sind sehr dicke Klebebänder häufig durch die Schicht hindurch nicht homogen. Dies ist meistens unerwünscht, da häufig Klebebänder benötigt werden, die unabhängig von ihrer Schichtdicke und von der Herstellung wohldefinierte Eigenschaften aufweisen.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Aufließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

In geschäumten, mehrschichtigen Klebebändern kann es bei einer Dauerbelastung zu einer ungleichmäßigen Spannungsverteilung kommen, die sich, sofern die Kräfte größer als die Adhäsion der Haftklebemasseschicht zur Oberfläche sind, in einem partiellen Ablösen der Haftklebmasseschicht äußern. Der Anteil der benetzten Fläche wird somit geringer.

Um ein Abfließen (ein Herunterlaufen) der Haftklebmassen vom Substrat zu verhindern und eine genügende Stabilität der Haftklebmasse im Klebeverbund zu garantieren, ist also eine hinreichende Kohäsion der Haftklebmassen erforderlich. Für gute Adhäsionseigenschaften müssen die Haftklebmassen aber andererseits in der Lage sein, auf das Substrat aufzufließen, genügend Wechselwirkungen mit der Oberfläche in der Grenzschicht auszubilden und eine gute und dauerhafte Benetzung der Substratoberfläche zu garantieren. Um Brüche innerhalb der Verklebungsfuge (innerhalb der Haftklebmassenschicht) zu vermeiden, ist zudem eine gewisse Elastizität der Haftklebmasse erforderlich.

Um eine hinreichende Kohäsion der Haftklebmassen zu erreichen, werden diese in der Regel vernetzt, das heißt einzelne Makromoleküle werden durch Brückenbindungen miteinander verknüpft. Die Vernetzung kann auf unterschiedliche Weisen geschehen, es gibt beispielsweise physikalische und chemische (thermische) Vernetzungsmethoden.

Chemische Vernetzungsmethoden führen meist zu einem irreversiblen, häufig kovalenten Netzwerk, welches eine ausreichende Kohäsion insbesondere bei hohen Temperaturen gewährleistet. Jedoch können aufgrund der Irreversibilität des Netzwerks Spannungen, wie sie durch mechanische Deformation verursacht werden, nicht abgebaut bzw. dissipiert werden, und die Adhäsion nimmt durch die verminderte Beweglichkeit der Polymerketten ab. Dies kann zur Ablösung (Entnetzung) der Klebemasse unter Dauerlast führen.

Zur Herstellung homogener Klebebänder ist es von Vorteil, die Polymere thermisch zu vernetzen: Es ist ohne weiteres möglich, auch dicke Schichten gleichmäßig mit thermischer Energie zu versorgen. Masseschichten, die durch aktinische Strahlung (beispielsweise ultraviolette Strahlung, Elektronenstrahlen) vernetzt wurden, zeigen hingegen ein Vernetzungsprofil durch die vernetzte Schicht hindurch. Dieses Vernetzungsprofil resultiert daraus, dass die Strahlen nur eine begrenzte Eindringtiefe in die Schicht hinein besitzen, wobei die Intensität der Strahlung zudem mit der Eindringtiefe aufgrund von Absorptionsprozessen abnimmt. Daher sind die außenliegenden Bereiche einer strahlenchemisch vernetzten Masseschicht stärker vernetzt als die weiter innen liegenden Bereiche, wobei die Vernetzungsintensität insgesamt nach innen abnimmt. Insbesondere für dicke Schichten ist dieser Effekt sehr signifikant.

So beschreiben die EP 2 305 389 A2 und EP 2 617 789 A1 thermisch vernetzte, geschäumte und ungeschäumte Montageklebebänder mit guten adhäsiven und kohäsiven Eigenschaften. Jedoch zeigen diese Klebebänder Schwächen im Benetzungsverhalten und auch hinsichtlich der Verklebung auf gekrümmten Untergründen, insbesondere wenn diese eine niedrige Oberflächenenergie aufweisen.

WO 2013/048985 A2 und WO 2013/048945 A1 beschreiben mehrschichtige Montageklebebänder, die insbesondere zur Verklebung auf unpolaren Oberflächen wie Autolacken geeignet sind. Die Klebebänder der WO 2013/048985 A2 sind dadurch gekennzeichnet, dass die äußere Haftklebmasseschicht (Meth)acrylsäureester mit 2-Alkylalkanolresten, welche 12 bis 32 Kohlenstoffatome aufweisen, und optional mit C1-12-Alkanolresten umfasst. In der WO 2013/048945 A1 umfasst die äußere Haftklebmasseschicht insbesondere Acrylsäureester mit einem primären Alkoholrest, der 14 bis 25 Kohlenstoffatome und einen iso-Index von mindestens 2 bis maximal 4 aufweist. Neben dem Nachteil, dass die dort beschriebenen Produkte mittels UV-Strahlung vernetzt sind, zeigt sich, dass die anfänglich gute Benetzung unter Belastung geringer wird, es also zu einer Entnetzung kommt.

US 2011/0244230 A1 beschreibt ein Acrylat-basiertes Schaumklebeband, welches besonders anschmiegsam ist und sich gut eignet, um auf unebenen Substraten verklebt zu werden. Allerdings sind die beschriebenen Klebebänder mittels UV-Strahlung vernetzt, so dass der resultierende Vernetzungsgradient zu einem schlechteren Benetzungsverhalten führt.

Die EP 2 226 372 A1 beschreibt eine thermisch vernetzte Haftklebmasse, die ein Polyacrylat mit einer Acrylsäurekonzentration von 8 bis 15 Gew.-% umfasst und dadurch gekennzeichnet ist, dass das Verhältnis der linearen zu den verzweigten Acrylsäureestern im Bereich von 1 : 6 bis 10 : 1 Masseanteilen liegt. In allen erfindungsgemäßen Beispielen werden thermische, koordinative Vernetzer wie z.B. Aluminium(III)acetylacetonat verwendet, die zu einem reversiblen Netzwerk führen. Jedoch zeigen die Massen eine nicht ausreichende Temperaturbeständigkeit für eine Anwendung als Montageklebeband.

Die WO 2017/207119 A1 beschreibt ein Klebeband aus einem Folienträger mit beidseitig angeordneten geschäumten Schichten aus einer selbstklebenden Masse, wobei die Klebmasseschichten mindestens ein Poly(meth)acrylat enthalten und das Poly(meth)acrylat mit mindestens einem kovalenten und mindestens einem koordinativen Vernetzer vernetzt ist.

Aufgabe der Erfindung ist es, leistungsstarke Klebebänder anzubieten, die raue und/oder gekrümmte Oberflächen mit unterschiedlichen Oberflächenenergien, z.B. Metalle, Kunststoffoberflächen wie ABS oder Polycarbonat sowie Automobillacke, schnell benetzten und dabei eine hohe Adhäsion aufbauen. Weiterhin sollen die damit hergestellten Verklebungen eine gute Scherfestigkeit auch bei erhöhten Temperaturen, eine hohe Feuchtwärmebeständigkeit sowie eine hohe Verklebungsfestigkeit bei dynamischer Belastung, letzteres insbesondere bei niedrigen Temperaturen, aufweisen. Schließlich soll eine dauerhafte mechanische Belastung der Verklebungen nicht zu einer Entnetzung des Klebebandes von der Oberfläche führen.

Der Lösung der Aufgabe liegt der Gedanke zugrunde, geschäumte Träger mit dual vernetzten Poly(meth)acrylat-Haftklebmassen zu versehen. Ein erster und allgemeiner Gegenstand der Erfindung ist somit ein Klebeband, umfassend mindestens eine geschäumte Schicht und mindestens eine Haftklebmasseschicht, dadurch gekennzeichnet, dass auf beiden Seiten der geschäumten Schicht eine Haftklebmasseschicht angeordnet ist, wobei die Haftklebmasseschicht jeweils mindestens ein Poly(meth)acrylat enthält und das Poly(meth)acrylat mit mindestens einem kovalenten und mindestens einem koordinativen Vernetzer vernetzt ist; und beide Haftklebmasseschichten vollständig identisch sind.

Erfindungsgemäße Klebebänder zeichnen sich insbesondere durch eine schnelle Benetzung und hohe Entnetzungsresistenz (repulsion resistance) auf niedrigenergetischen Oberflächen auch bei anhaltender mechanischer Belastung der Verklebung sowie durch gute sonstige klebtechnische Eigenschaften aus.

Die geschäumte Schicht enthält bevorzugt zu mindestens 50 Gew.-%, stärker bevorzugt zu mindestens 70 Gew.-%, besonders bevorzugt zu mindestens 80 Gew.-%, insbesondere zu mindestens 90 Gew.-%, jeweils bezogen auf das Gesamtgewicht der geschäumten Schicht, mindestens ein Polymer ausgewählt aus der Gruppe bestehend aus Kautschuken, insbesondere Naturkautschuken, Polyurethanen, Poly(meth)acrylaten und Styrolblockcopolymeren sowie Blends der genannten Polymere. Besonders bevorzugt enthält die geschäumte Schicht zu mindestens 50 Gew.-%, stärker bevorzugt zu mindestens 70 Gew.-%, besonders bevorzugt zu mindestens 80 Gew.-%, insbesondere zu mindestens 90 Gew.-%, jeweils bezogen auf das Gesamtgewicht der geschäumten Schicht, ein oder mehrere Poly(meth)acrylate.

Unter einem "Poly(meth)acrylat" wird ein Polymer verstanden, welches durch radikalische Polymerisation von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Insbesondere enthält die geschäumte Schicht zu mindestens 50 Gew.-%, stärker bevorzugt zu mindestens 70 Gew.-%, besonders bevorzugt zu mindestens 80 Gew.-%, insbesondere zu mindestens 90 Gew.-%, jeweils bezogen auf das Gesamtgewicht der geschäumten Schicht, mindestens ein Poly(meth)acrylat A, das auf die folgende Monomerzusammensetzung zurückgeführt werden kann:

a1) 40 bis 77 Gew.-% mindestens eines (Meth)Acrylsäureesters mit einer Glasübergangstemperatur des Homopolymeren von maximal -40 °C, dessen Alkoholkomponente ein verzweigter, primärer Alkohol zugrunde liegt;
a2) 20 bis 40 Gew.-% mindestens eines (Meth)Acrylsäureesters, dessen Alkoholkomponente ein linearer $C_1$-$C_{18}$-Alkohol zugrunde liegt;
a3) 0 bis 20 Gew.-% mindestens eines (Meth)Acrylsäureesters, dessen Alkoholkomponente ein cyklischer Alkohol zugrunde liegt;
a4) 3 bis 20 Gew.-% Acrylsäure.

Bevorzugt weist bzw. weisen die in der geschäumten Schicht enthaltenen Polymere, besonders bevorzugt das Polymer A, ein gewichtsmittleres Molekulargewicht $M_w$ von mindestens 500.000 g/mol, besonders bevorzugt von mindestens 700.000 g/mol auf. Ebenfalls bevorzugt weisen die in der geschäumten Schicht enthaltenen Polymere ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für die in der geschäumten Schicht enthaltenen Polymere bevorzugt $10 \leq PD \leq 100$, besonders bevorzugt $20 \leq PD \leq 80$.

Bevorzugt ist die geschäumte Schicht thermisch vernetzt, was zu einer sehr homogenen Ausbildung dieser Schicht führt. Besonders bevorzugt ist die geschäumte Schicht durch mindestens einen Glycidylether, insbesondere mindestens ein 3-Glycidyloxypropyltrialkoxysilan und/oder einen Polyglycidylether, ganz besonders bevorzugt mindestens durch 3-Glycidyloxypropyltriethoxysilan und/oder Pentaerythrittetraglycidether, thermisch vernetzt. Die Vernetzung der geschäumten Schicht erfolgt bevorzugt in Kombination mit einem Amin, besonders bevorzugt mit 3-Aminopropyltriethoxysilan und/oder Isophorondiamin, als Beschleuniger.

Der Anteil der Gesamtheit der Vernetzer in der zu vernetzenden geschäumten Schicht beträgt bevorzugt bis zu 1 Gew.-%, stärker bevorzugt bis zu 0,8 Gew.-%, insbesondere 0,05 bis 0,6 Gew.-% und ganz besonders bevorzugt 0,1 bis 0,5 Gew.-%, jeweils bezogen auf die Gesamtmenge der zu vernetzenden Polymere.

Der Anteil der Gesamtheit der Beschleuniger in der zu vernetzenden geschäumten Schicht beträgt bevorzugt 0,1 bis 1,5 Gew.-%, stärker bevorzugt 0,15 bis 1,2 Gew.-%, jeweils bezogen auf die Gesamtmenge der zu vernetzenden Polymere.

Die Anwesenheit eines Aminbeschleunigers in der geschäumten Schicht ist insbesondere bei Drei- oder Mehrschichtaufbauten unkritisch, da die geschäumte Schicht bei diesen Aufbauten als Trägerschicht fungiert und somit durch die außenliegenden Klebmasse- bzw. Haftklebmasseschichten von dem Einfluss oxidierender Substanzen wie etwa Luftsauerstoff weitgehend abgeschirmt wird.

Die geschäumte Schicht kann grundsätzlich auf jede beliebige Art und Weise geschäumt sein. Beispielsweise kann die geschäumte Schicht mittels eines eingebrachten oder in ihr freigesetzten Treibgases geschäumt sein. Als eingebrachtes Treibgas kommen dabei zum Beispiel $CO_2$ oder $N_2$ in Frage, ggf. auch als superkritisches Fluid.

Die Freisetzung eines Treibgases kann alternativ durch ein sich unter Gasfreisetzung thermisch zersetzendes Treibmittel bewirkt werden, z.B. durch NaHCOs, die freien Säuren oder Derivate von Zitronensäure, Ascorbinsäure, Fumarsäure, Gluconsäure oder Milchsäure oder exotherme Treibmittel wie Azodicarbonamid.

Auch mechanisches Schäumen (Frothing) kommt in Frage.

Bevorzugt enthält die geschäumte Schicht mindestens ein Schäumungsmittel, das ausgewählt ist aus der Gruppe bestehend aus Polymerhohlkugeln, Polymervollkugeln, Glashohlkugeln, Glasvollkugeln, keramischen Hohlkugeln, keramischen Vollkugeln und Kohlenstoffvollkugeln. Besonders bevorzugt enthält die geschäumte Schicht zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich.

Durch Wärmeeinwirkung auf die Mikroballons erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220°C) differenzieren. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung der geschäumten Schicht geeignet.

Die geschäumte Schicht kann auch mit sogenannten vorexpandierten Mikrohohlkugeln erzeugt werden. Bei dieser Gruppe findet die Expansion schon vor der Einmischung in die Polymermatrix statt.

Der Begriff "zumindest teilweise expandierte Mikrohohlkugeln" wird erfindungsgemäß so verstanden, dass die Mikrohohlkugeln zumindest soweit expandiert sind, dass damit eine Dichteverringerung der betreffenden Schicht in einem technisch sinnvollen Ausmaß im Vergleich zu derselben Schicht mit den unexpandierten Mikrohohlkugeln bewirkt wird. Dies bedeutet, dass die Mikroballons nicht zwingend vollständig expandiert sein müssen. Bevorzugt sind die "mindestens teilweise expandierten Mikrohohlkugeln" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikrohohlkugeln und soll nicht ausdrücken, dass nur ein Teil der in Betracht kommenden Mikrohohlkugeln (an)expandiert sein muss. Wenn also "zumindest teilweise expandierte Mikrohohlkugeln" und unexpandierte Mikrohohlkugeln in der geschäumten Schicht enthalten sind, dann bedeutet dies, dass unexpandierte (gar nicht expandierte, also auch nicht anexpandierte) Mikrohohlkugeln nicht zu den "zumindest teilweise expandierten Mikrohohlkugeln" gehören.

Die geschäumte Schicht kann Kieselsäure enthalten, bevorzugt gefällte, mit Dimethyldichlorsilan oberflächenmodifizierte Kieselsäure. Dies ist vorteilhaft, weil sich damit die Wärmescherfestigkeit der Schicht einstellen, insbesondere erhöhen lässt. Kieselsäuren lassen sich darüber hinaus hervorragend für transparente Schichten verwenden. Bevorzugt ist Kieselsäure bis zu 15 Gew.-%, bezogen auf die Gesamtheit aller in der geschäumten Schicht enthaltenen Polymere, in der geschäumten Schicht enthalten.

Die geschäumte Schicht kann auch mindestens einen Weichmacher enthalten. Der Weichmacher ist bevorzugt ausgewählt aus der Gruppe bestehend aus (Meth)Acrylat-Oligomeren, Phthalaten, Cyclohexandicarbonsäureestern (z.B. Hexamoll® DINCH, Fa. BASF), wasserlöslichen Weichmachern, Weichharzen, Phosphaten (z.B. Levagard® DMPP, Fa. Lanxess) und Polyphosphaten.

Unter einer Haftklebmasse wird erfindungsgemäß, wie allgemein üblich, ein Stoff verstanden, der - insbesondere bei Raumtemperatur - dauerhaft klebrig sowie klebfähig ist. Charakteristisch für eine Haftklebmasse bzw. einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art des Haftklebstoffs, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebstoffe haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des Haftklebstoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte, insbesondere irreversibel vernetzte, Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10^0$ bis $10^0$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich 10° bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Die Haftklebmasseschichten des erfindungsgemäßen Klebebandes enthalten bevorzugt mindestens ein Poly(meth)acrylat B, das sich auf die folgende Monomerzusammensetzung zurückführen lässt:

b1) 55 bis 75 Gew.-% mindestens eines (Meth)Acrylsäureesters mit einer Glasübergangstemperatur des Homopolymeren von maximal -40 °C, dessen Alkoholkomponente ein verzweigter, primärer Alkohol zugrunde liegt;

b2) 20 bis 40 Gew.-% mindestens eines (Meth)Acrylsäureesters, dessen Alkoholkomponente ein linearer $C_1$-$C_{18}$-Alkohol zugrunde liegt;

b3) 5 bis 15 Gew.-% Acrylsäure.

Bevorzugt weist das Poly(meth)acrylat der Haftklebmasseschichten ein gewichtsmittleres Molekulargewicht $M_w$ von mindestens 500.000 g/mol, besonders bevorzugt von mindestens 700.000 g/mol auf. Ebenfalls bevorzugt weist das Poly(meth)acrylat der Haftklebmasseschichten ein gewichtsmittleres Molekulargewicht $M_w$ von maximal 1.700.000 g/mol auf. Die Polydispersität PD, also die Breite der Molmassenverteilung, die als Quotient des gewichtsmittleren Molekulargewichts $M_w$ und des zahlenmittleren Molekulargewichts $M_n$ ermittelt wird, beträgt für das Poly(meth)acrylat der Haftklebmasseschichten bevorzugt $10 \leq PD \leq 100$, besonders bevorzugt $20 \leq PD \leq 80$.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen, indem ein- und dasselbe Vernetzermolekül mit zwei unterschiedlichen Makromolekülen reagiert, also insbesondere mindestens zwei reaktive Zentren besitzt; sie können aber auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Das Poly(meth)acrylat der Haftklebmasseschichten des erfindungsgemäßen Klebebandes ist mit zwei verschiedenartigen Vernetzern vernetzt, nämlich

1) mit mindestens einem kovalenten Vernetzer - dies sind Vernetzer, die an den zu verknüpfenden Makromolekülen kovalent angreifen und somit eine kovalente chemische Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren kovalente Bindungen ausbildenden chemischen Reaktionen in Frage.

2) mit mindestens einem koordinativen Vernetzer - dies sind Vernetzer, die an den zu verknüpfenden Makromolekülen koordinativ angreifen und somit eine koordinative Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren koordinative Bindungen ausbildenden chemischen Reaktionen in Frage.

Der kovalente Vernetzer der Haftklebmasseschichten des erfindungsgemäßen Klebebandes ist bevorzugt ausgewählt aus der Gruppe bestehend aus jeweils mehrfachfunktionellen Glycidylaminen, Epoxiden, insbesondere auch Epoxid-funktionalisierten Organosilanen, Aziridinen und Isocyanaten.

Bevorzugte mehrfachfunktionelle Glycidylamine sind *N,N,N',N'*-Tetrakis(2,3-epoxypropyl)cyclohexan-1,3-dimethylamin (z.B. syna Epoxy S610, synasia) und *N,N,N',N'*-Tetrakis(2,3-epoxypropyl)-m-xylen-a,a'-diamin (z.B. Erisys GA-240, CVC).

Bevorzugte mehrfachfunktionelle Epoxide sind Epoxycyclohexylcarboxylat-2,2-Bis(hydroxymethyl)-1,3-propandiol und (3,4-Epoxycyclohexan)methyl-3,4-epoxycyclohexylcarboxylat sowie Epoxid-funktionalisierte Organosilane, insbesondere (3-Glycidyloxypropyl)trimethoxysilan (GLYMO) und (3-Glycidyloxypropyl)triethoxysilan (GLYEO). Ein bevorzugtes mehrfachfunktionelles Aziridin ist Trimethylolpropantris(2-methyl-1-aziridinpropionat).

Bevorzugte Isocyanate sind Toluendiisocyanat (TDI), 2,4-Toluendiisocyanatdimer, Naphthylen-1,5-diisocyanat (NDI), o-Toluendiisocyanat (TODI), Diphenylmethandiisocyanat (MDI), Triphenylmethantriisocyanat, Tris-(p-isocyanatphenyl)thiophosphit und Polymethylenpolyphenylisocyanat.

Besonders bevorzugt umfasst der kovalente Vernetzer mindestens eine Verbindung enthaltend mindestens eine cyclische Etherfunktion, insbesondere mindestens zwei cyclische Etherfunktionen.

Es wird erfindungsgemäß zumindest ein kovalenter Vernetzer eingesetzt, es können aber auch zwei oder mehr kovalente Vernetzer zum Einsatz kommen, und zwar sowohl zwei oder mehr Vernetzer aus einer Verbindungsklasse als auch Kombinationen kovalenter Vernetzer aus verschiedenen Verbindungsklassen.

Der koordinative Vernetzer der Haftklebmasseschichten des erfindungsgemäßen Klebebandes ist bevorzugt ausgewählt aus Chelatverbindungen, insbesondere aus mehrwertigen Metallchelatverbindungen. Unter "mehrwertigen Metallchelatverbindungen" werden solche Verbindungen verstanden, bei der ein mehrwertiges Metall koordinativ an eine oder mehrere organische Verbindungen gebunden ist. Besonders bevorzugt ist der koordinative Vernetzer eine mehrwertige Metallchelatverbindung, deren mehrwertiges Metallion ausgewählt ist aus der Gruppe bestehend aus Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV) und Ti(IV); insbesondere aus der Gruppe bestehend aus Al(III), Zr(IV) und Ti(IV).

Als Liganden der koordinativen Vernetzer können grundsätzlich alle bekannten Liganden dienen. Die für die koordinative Bindung der organischen Verbindung genutzten Atome sind aber insbesondere solche Atome, die feie Elektronenpaare aufweisen, wie beispielweise Sauerstoffatome, Schwefelatome, Stickstoffatome und dergleichen. Die organische Verbindung bzw. die organischen Verbindungen des koordinativen Vernetzers sind bevorzugt ausgewählt aus der Gruppe bestehend aus Alkylestern, Alkoholen, Carbonsäuren, Ethern und Ketonen. Besonders bevorzugt ist der koordinative Vernetzer der Haftklebmasseschicht des erfindungsgemäßen Klebebandes ausgewählt aus der Gruppe bestehend aus Titandipropoxidbis(acetylacetonat), Titandibutoxidbis(octylenglycolat), Titandipropoxid-bis(ethylacetoacetat), Titandipropoxidbis(lactat), Titandipropoxidbis(triethanolaminat), Titandin-butoxidbis(triethanolaminat), Titantri-n-butoxidmonostearat, Butyltitanatdimer, Poly(titanacetylacetonat), Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiummonoacetylacetonatbis(ethylacetoacetonat) und Zirkoniumtetraacetylacetonat; insbesondere aus Aluminiumtriacetylacetonat und Aluminiumdiisopropoxidmonoethylacetat.

Es wird erfindungsgemäß zumindest ein koordinativer Vernetzer eingesetzt, es können aber auch zwei oder mehr koordinative Vernetzer zum Einsatz kommen, und zwar sowohl zwei oder mehr Vernetzer aus einer Verbindungsklasse als auch Kombinationen koordinativer Vernetzer aus verschiedenen Verbindungsklassen.

Vorzugsweise sind vor Beginn der Vernetzung kovalente Vernetzer und koordinative Vernetzer in den Haftklebmasseschichten in einem derartigen Mengenverhältnis enthalten, dass die funktionellen Gruppen der kovalenten Vernetzer im molaren Überschuss, bezogen auf die Bindungsstellen der koordinativen Vernetzer, vorliegen. Besonders bevorzugt beträgt dabei das molare Verhältnis der funktionellen Gruppen der kovalenten Vernetzer zu den Bindungsstellen der koordinativen Vernetzer - also das Verhältnis der eingesetzten Stoffmenge $n_{kov}$ der funktionellen Gruppen der kovalenten Vernetzer zur eingesetzten Stoffmenge $n_{koord}$ der Bindungsstellen der koordinativen Vernetzer - 3 : 1 bis 9 : 1, dementsprechend $3 \leq n_{kov}/n_{koord} \leq 9$, insbesondere 4,5 : 1 bis 8,5 : 1.

Die Haftklebmasseschichten des erfindungsgemäßen Klebebandes können einen oder mehrere Weichmacher enthalten. Die Weichmacher sind bevorzugt ausgewählt aus der Gruppe bestehend aus (Meth)Acrylat-Oligomeren, Phthalaten, Cyclohexandicarbonsäureestern (z.B. Hexamoll® DINCH, Fa. BASF), wasserlöslichen Weichmachern, Weichharzen, Phosphaten (z.B. Levagard® DMPP, Fa. Lanxess) und Polyphosphaten.

Im Aufbau des erfindungsgemäßen Klebebandes ist auf beiden Seiten der geschäumten Schicht eine Haftklebmasseschicht angeordnet, wobei beide Haftklebmasseschichten erfindungsgemäß vernetzt sind.

Dies ist vorteilhaft, weil beide Seiten des Klebebandes die sehr guten klebtechnischen Eigenschaften der erfindungsgemäß vernetzten Haftklebmasseschicht aufweisen. Insbesondere enthalten die beiden Haftklebmasseschichten identische Zusätze in identischer Konzentration, z.B. funktionelle Zusätze und/oder Füllstoffe. Ebenso können beide Haftklebmasseschichten auch frei von funktionellen Zusätzen und/oder Füllstoffen sein. Erfindungsgemäß sind beide Haftklebmasseschichten vollständig identisch, wobei unwesentliche Nichtübereinstimmungen, wie sie beispielsweise aus Verunreinigungen im Rahmen der Allgegenwartskonzentration, aus produktionsbedingten Ungenauigkeiten und ähnlichen sonstigen Quellen resultieren können, unbeachtlich sind.

Die beiden Haftklebmasseschichten können zur Stabilisierung bzw. zum Schutz mit einem Releaseliner oder anderweitig mit einem herkömmlichen Folienmaterial versehen sein. Ein Releaseliner oder ein sonstiges Folienmaterial werden aber nicht dem erfindungsgemäßen Klebeband zugerechnet, sondern nur als Hilfsmittel bei dessen Aufbewahrung, Transport etc. angesehen.

Sowohl die in den Haftklebmasseschichten als auch die in der geschäumten Schicht des erfindungsgemäßen Klebebandes enthaltenen Poly(meth)acrylate lassen sich vorzugsweise durch freie radikalische Polymerisation, bevorzugt in Lösung, gemäß dem Stand der Technik herstellen. Im Falle einer gegebenenfalls nachfolgenden Verarbeitung aus der Schmelze wird das Lösungsmittel nach der Polymerisation abgezogen.

Die geschäumte Schicht wird bevorzugt aus der Schmelze zur Schicht ausgeformt. Bevorzugt findet dabei eine thermische Vernetzung der geschäumten Schicht statt. Auch die Haftklebmasseschichten können aus der Schmelze ausgeformt werden. Da diese Schichten üblicherweise aber nur in Schichtdicken bis zu etwa 100 μm erzeugt werden, lassen sie sich hervorragend auch aus Lösung beschichten und danach trocknen.

Verfahrenstechnisch bedingt lassen sich sehr dicke Polymerschichten wie die geschäumte Schicht des erfindungsgemäßen Klebebandes sehr viel besser aus der Schmelze (sogenanntes Hotmelt-Verfahren) als aus der Polymer-Lösung herstellen. Zur Definition einer Schmelze eines amorphen Polymers - wie beispielsweise eines Polyacrylats - werden erfindungsgemäß die in F. R. Schwarzl, Polymermechanik: Struktur und mechanisches Verhalten von Polymeren, Springer Verlag, Berlin, 1990 angegebenen Kriterien verwendet, wonach die Viskosität die Größenordnung von maximal $\eta \approx 10^4$ Pa s aufweist und die innere Dämpfung tan δ Werte von $\geq 1$ erreicht.

Wenn die geschäumte Schicht und ggf. auch die Haftklebmasseschichten des erfindungsgemäßen Klebebandes durch eine Beschichtung aus der Schmelze hergestellt werden, ergibt sich ein aus der bevorzugten thermischen Vernetzung resultierendes Problem. Einerseits müssen die thermischen Vernetzer zur Initiierung einer nachfolgenden thermischen Vernetzung vor der Beschichtung zugesetzt werden, andererseits sind die Vernetzer dann den hohen Temperaturen zur Erzeugung und Aufrechterhaltung der Polymerschmelze ausgesetzt. Dies kann bereits vor dem Eintreten einer kontrollierten Vernetzung zu einer unkontrollierten Polymervernetzung (sogenannte Vergelung) führen. Um diese Vergelung weitestgehend zu unterdrücken, werden im Hotmelt-Verfahren üblicherweise sehr reaktionsträge Vernetzer eingesetzt, und zwar erst kurz vor der Beschichtung. Um aber dennoch nach Beschichtung befriedigende Vernetzungsergebnisse zu erzielen, werden daneben häufig sogenannte Beschleuniger beigemischt.

Auch für aus Lösung beschichtete Polymersysteme, die thermisch vernetzt werden sollen, kann der Einsatz von Beschleunigern sinnvoll sein und wird häufig realisiert. Der thermisch initiierte Vernetzungsvorgang wird üblicherweise verbunden mit der thermischen Entfernung des Lösungsmittels aus der aufgetragenen Schicht (also der Trocknung der Masseschicht). Ein zu schnelles Entfernen des Lösungsmittels führt dabei zu einer schlecht ausgebildeten, ungleichmäßigen und inhomogenen Schicht, beispielsweise durch Blasenbildung. Aus diesem Grund wird die Trocknung bevorzugt bei moderaten Temperaturen durchgeführt. Um dennoch eine gute und hinreichend schnell verlaufende Vernetzung zu garantieren, sind auch den Lösungsmittelsystemen üblicherweise Beschleuniger zugesetzt.

Eine Beschichtung aus Lösung wird häufig dann bevorzugt, wenn die Dicke der resultierenden Schichten nicht sehr groß ist, so dass eine erhöhte Viskosität einer aufzubringenden Polymerschmelze im Vergleich zu einer Polymerlösung mit signifikanten Problemen verbunden ist.

Erfindungsgemäß bevorzugt ist die geschäumte Schicht unter Beteiligung von Beschleunigern vernetzt. Als Beschleuniger oder auch beschleunigend wirkende Substanz werden insbesondere Protonenakzeptoren, Elektronenpaardonatoren (Lewisbasen) und/oder Elektronenpaarakzeptoren (Lewissäuren) eingesetzt. Beschleuniger sind solche Verbindungen oder Chemikalien, die Vernetzungsreaktionen insofern unterstützen, als sie für eine dem technischen Zweck entsprechend hinreichende Reaktionsgeschwindigkeit sorgen. Dies geschieht insbesondere katalytisch (durch Aktivierung der Vernetzungsreaktion) und/oder durch Umwandlung funktioneller Gruppen der Vernetzersubstanzen oder der zu vernetzenden Makromoleküle zu funktionellen Gruppen, die im Sinne einer Verknüpfungsreaktion der Makromoleküle untereinander (Brückenbildung, Netzwerkbildung) oder über die Vernetzersubstanzen mit weiteren funktionellen Gruppen reagieren können. Die Beschleuniger selbst nehmen nicht an einer solchen Verknüpfungsreaktion teil, sie vernetzen selbst also nicht, können aber in Form von Reaktionsprodukten oder Fragmenten in das Netzwerk eingebunden oder an dieses geknüpft sein. Ein Beschleuniger sorgt also für eine wesentliche Verbesserung der Reaktionskinetik der Vernetzungsreaktion.

Die Vernetzungsreaktion in Abwesenheit eines Beschleunigers würde bei ausgewählten Reaktionsparametern - erfindungsgemäß insbesondere einer Temperatur, die unterhalb der Verarbeitungstemperatur der Polymere der geschäumten Schicht liegt - nicht oder nur unzureichend schnell ablaufen. Beispielsweise sind viele Epoxide, die als Vernetzer für Polyacrylate eingesetzt werden, von Natur aus eher reaktionsträge, so dass sie ohne Beschleuniger keine befriedigenden Vernetzungsergebnisse erbringen.

Protonendonoren, insbesondere Carbonsäuren bzw. Carbonsäuregruppen bzw. deren deprotonierte Derivate, sind im erfindungsgemäßen Sinne nicht zu den Beschleunigern zu zählen.

Die Anwesenheit von Beschleunigern in den Haftklebmasseschichten weist durchaus auch Nachteile auf. So neigen insbesondere stickstoffhaltige Beschleuniger wie beispielsweise Amine durch Oxidationsprozesse mit der Zeit zur Vergilbung, so dass derartige Beschleunigersysteme insbesondere für transparente Haftklebmassen oder mehrschichtige Haftklebebänder, die insbesondere für optische Zwecke eingesetzt werden sollen, schlecht oder nicht geeignet sind. Weiterhin können basische oder saure Beschleuniger mit der Zeit auch zu einer Korrosion des zu verklebenden Substrates führen.

Erfindungsgemäß wird daher angestrebt, die thermische Vernetzung der Haftklebmasseschichten, insbesondere solcher, die in Luftkontakt stehen, mit den zuvor genannten kovalenten und koordinativen Vernetzern zu erzielen, die hinreichend reaktiv sind, sodass kein Beschleuniger beigemischt werden muss. Bevorzugt sind also die Haftklebmasseschichten des erfindungsgemäßen Klebebandes ohne Beschleuniger vernetzt bzw. sie sind frei von die Vernetzung beschleunigenden Substanzen. Die Abwesenheit von Beschleunigern bezieht sich dabei insbesondere auf extern zugesetzte, also nicht einpolymerisierte bzw. in das Polymergerüst eingebaute, Beschleuniger. Besonders bevorzugt enthalten die Haftklebmasseschichten aber weder extern zugesetzte noch einpolymerisierte Beschleuniger, insbesondere enthalten sie gar keine Beschleuniger.

Die thermische Vernetzung der geschäumten Schicht und der beiden Haftklebmasseschichten kann gleichzeitig durchgeführt werden, etwa wenn die Haftklebmassen auf die noch nicht vernetze geschäumte Schicht aufgebracht werden oder die Schichten in einem speziellen Verfahren gemeinsam ausgeformt werden.

Die einzelnen Schichten können aber auch in separaten Verfahren thermisch vernetzt werden, etwa wenn die Haftklebmassen auf die bereits thermisch vernetzte geschäumte Schicht beschichtet und dann thermisch vernetzt werden oder wenn die Haftklebmassen an einem anderen Ort ausgeformt und thermisch vernetzt werden - etwa auf einem temporären Trägermaterial - und dann auf die bereits vernetzte geschäumte Schicht aufkaschiert werden. Insbesondere dafür kann es vorteilhaft sein, die geschäumte Schicht und/oder die Haftklebmasseschichten chemisch und/oder physikalisch vorzubehandeln, beispielsweise durch Corona- und/oder Plasma-Behandlung und/oder reaktive Corona- und/oder reaktive Plasmabehandlung unter Verwendung von Gasen wie z.B. Stickstoff, Sauerstoff, Fluor und/oder weiteren und/oder durch Flammenbehandlung (Flame-Treatment).

Die Herstellung erfindungsgemäßer doppelseitiger, insbesondere dreischichtiger Klebebänder kann entsprechend der Darstellung für Drei- bzw. Mehrschichtsysteme in der EP 1 802 722 A1 erfolgen. Die dort beschriebenen Herstellungs- und Beschichtungsverfahren können analog auch für die in der vorliegenden Schrift beschriebenen Klebebänder angewandt werden; der Offenbarungsgehalt der EP 1 802 722 A1 soll daher als in die vorliegende Offenbarung explizit eingeschlossen gelten. Gleiches gilt für die Darstellung der in der EP 1 802 722 A1 beschriebenen Produktaufbauten.

Die Schäumung mit Mikroballons zur Herstellung der geschäumten Schicht erfolgt bevorzugt gemäß den in den EP 2 414 143 A1 und DE 10 2009 015 233 A1 beschriebenen Verfahren.

Die geschäumte Schicht des erfindungsgemäßen Klebebandes kann als sehr hochviskose Flüssigkeit angesehen werden, die unter Druckbelastung das Verhalten des Fließens (auch als "kriechen" bezeichnet) zeigt. Viskoelastische Massen weisen allgemein bereits durch die Schwerkraft, also unter Belastung durch ihr eigenes Gewicht, die Fähigkeit auf, mehr oder weniger langsam zu fließen, insbesondere auf einen Untergrund aufzufließen bzw. einen Untergrund zu benetzen. Mindestens aber findet dieser Effekt unter einer zusätzlichen externen Druckeinwirkung statt. Eine Druckerhöhung, etwa durch Andrücken des Klebebandes auf einen Untergrund, kann dieses Verhalten deutlich beschleunigen.

Viskoelastische Massen besitzen ferner die Fähigkeit, bei langsamer Krafteinwirkung die auf sie einwirkenden Kräfte zu relaxieren. Sie sind also in der Lage, die Kräfte in Schwingungen und/oder Verformungen, die auch - zumindest zum Teil - reversibel sein können, zu dissipieren, somit die einwirkenden Kräfte "abzupuffern" und eine mechanische Zerstörung häufig zu vermeiden, zumindest aber zu verringern oder den Zeitpunkt des Eintretens der Zerstörung hinauszuzögern. Im Falle einer sehr schnell einwirkenden Kraft zeigen viskoelastische Massen üblicherweise ein elastisches Verhalten, also das Verhalten einer vollständig reversiblen Verformung, wobei Kräfte, die über das Elastizitätsvermögen der Masse hinausgehen, zu einem Bruch führen können.

Im Gegensatz hierzu stehen elastische Materialien, die auch bei langsamer Krafteinwirkung das beschriebene elastische Verhalten zeigen. Elastisches Verhalten wirkt sich grundsätzlich negativ auf die Benetzung aus. Auch die erfindungsgemäßen Haftklebmasseschichten zeigen trotz eines ausgeprägt elastischen Verhaltens unter schneller Kraftbeanspruchung insgesamt überwiegend ein ausgeprägt viskoelastisches Verhalten; insbesondere auf einer langen Zeitskala verhalten sie sich eher viskos wie eine Flüssigkeit, sodass eine optimale und insbesondere schnelle Benetzung erzielt wird.

Erfindungsgemäße doppelseitige Klebebänder weisen allgemein und in den vorstehend beschriebenen Ausführungsformen eine Reihe spezifischer Vorteile auf:

Durch die thermische Vernetzung weisen die Klebebänder kein Vernetzungsprofil durch ihre Schichten hindurch auf. Viskoelastische Schichten bzw. Haftklebmasseschichten, die durch aktinische Strahlung (ultraviolette Strahlung, Elektronenstrahlen) vernetzt wurden, weisen ein Vernetzungsprofil durch die jeweilige vernetzte Schicht hindurch auf. Thermisch vernetzte Masseschichten zeigen dieses Verhalten nicht, da die Wärme gleichmäßig in die Schicht eindringen kann.

Mittels der erfindungsgemäßen Kombination aus kovalenten und koordinativen Vernetzern thermisch vernetzte Haftklebmassen weisen eine höhere Klebkraft bzw. ein schnelleres Erreichen der endgültigen Klebkräfte sowie eine bessere Wärmescherfestigkeit auf als mittels anderer Vernetzer vernetzte Systeme. Dieser Befund hat eine große Bedeutung für die erfindungsgemäßen Klebebänder. Setzt man einen geschäumten Träger auf Poly(meth)acrylatbasis ein und rüstet diesen mit einer erfindungsgemäß vernetzten Haftklebmasse aus, sind sowohl die Klebkräfte als auch das Benetzungsverhalten besser als bei Systemen,

- die die entsprechende Haftklebmasse auf einem eher elastischen Polymerträger (herkömmlicher Schaumträger wie beispielsweise PE-basiert) aufweisen oder
- die den gleichen geschäumten Träger, aber eine andere, wenn auch an sich deutlich klebrigere, Haftklebmasse aufweisen.

Für die Klebkraft eines erfindungsgemäßen Klebebandes spielt nicht nur die außenliegende Haftklebmasseschicht eine Rolle, sondern gleichfalls die geschäumte Schicht, so dass für die hervorragenden Klebeeigenschaften das Gesamtsystem von Bedeutung ist. Die den erfindungsgemäßen Klebebändern zugrundeliegende Idee beinhaltet also die Kombination einer relativ weichen Schaumschicht mit einer sowohl kovalent als auch koordinativ vernetzten Haftklebmasseschicht. Dies resultiert darin, dass durch das Zusammenspiel der beiden Schichten das Klebeverhalten deutlich besser ist als bei Klebebändern mit anders vernetzten Haftklebmasseschichten oder mit elastischen Trägern.

Die erfindungsgemäßen Klebebänder können über die bisher beschriebenen Schichten hinaus weitere Schichten umfassen, also Mehrschichtsysteme mit einer Schichtenabfolge größer drei bilden. Es ist vorteilhaft, wenn dabei die geschäumte Schicht unmittelbar, zumindest aber mittelbar mit den erfindungsgemäßen Haftklebmasseschichten ausgerüstet ist, weil dann die schon beschriebenen klebtechnischen Vorteile realisiert werden. Besonders bevorzugt besteht ein erfindungsgemäßes Klebeband aus der geschäumten Schicht und zwei erfindungsgemäß vernetzten Haftklebmasseschichten.

Erfindungsgemäße Klebebänder zeichnen sich auch dadurch aus, dass sie als sehr dicke Produkte hergestellt werden können, die zudem sehr hohe Klebkräfte besitzen. Solche Produkte finden beispielsweise Anwendung bei Verklebungen, die Unebenheiten oder Hohlräume ausgleichen müssen, beispielsweise in der Baubranche oder in der Automobilindustrie.

Aufgrund des guten Relaxationsverhaltens der geschäumten Schicht sind erfindungsgemäße Klebebänder geeignet, Krafteinwirkungen wie mechanische Beanspruchungen, Stöße und dergleichen abzufangen und deren Energie zu dissipieren. Erfindungsgemäße Klebebänder sind daher besonders für Anwendungen geeignet, bei denen eine stoß- und/oder erschütterungsdämpfende Wirkung gewünscht ist, wie etwa zur Verklebung zerbrechlicher Gegenstände in Elektronikprodukten. Von besonderem Vorteil ist der Einsatz erfindungsgemäßer Klebebänder, wenn Materialien mit unterschiedlichen Wärmeausdehnungskoeffizienten miteinander verklebt werden sollen, da die erfindungsgemäßen Klebebänder durch ihr Relaxationsvermögen Spannungen dissipieren können, die aus dem unterschiedlichen Ausdehnungsverhalten der miteinander verklebten Gegenstände bzw. Oberflächen resultieren. Herkömmliche Klebebänder neigen dagegen bei stark unterschiedlichem Ausdehnungsverhalten der verklebten Gegenstände häufig zum Versagen, das heißt es kommt zur Schwächung oder gar zum Bruch der Verklebungsstelle.

Erfindungsgemäße Klebebänder können in üblichen Klebebanddicken von einigen bis einigen hundert Mikrometern, besonders vorteilhaft aber in Dicken von mehr als 300 $\mu$m, beispielsweise 500 $\mu$m oder mehr, 1000 $\mu$m oder mehr, 1500 $\mu$m oder mehr, 2000 $\mu$m oder mehr oder auch 3000 $\mu$m oder mehr hergestellt werden. Auch noch dickere Produkte sind realisierbar.

Bevorzugt weisen bei einem erfindungsgemäßen Klebeband die geschäumte Schicht eine Schichtdicke von 300 bis 2500 $\mu$m, stärker bevorzugt von 400 bis 2400 $\mu$m, und die Haftklebmasseschichten eine Schichtdicke von jeweils 40 bis 150 $\mu$m, stärker bevorzugt von jeweils 50 bis 100 $\mu$m, auf.

Erfindungsgemäße Klebebänder eignen sich auch besonders gut zur Verklebung und Befestigung von Zierleisten, Emblemen und Stoßfängern Fahrzeugen. Falls benötigt, können diese Oberflächen vor der Verklebung noch mit einem Primer behandelt werden, um die Verklebungsfestigkeit noch weiter zu steigern.

Weitere Anwendungsgebiete, für die erfindungsgemäße Klebebänder hervorragend geeignet sind, sind zum Beispiel der Gebäudebau bzw. -ausbau, die Gebäudeausrüstung und der Architekturbereich (jeweils innen und außen), der Heimwerkerbereich, der Modellbau, die Möbelherstellung, der Schiff- und der Flugzeugbau, die Elektronik- und die Elektroindustrie (beispielsweise für Unterhaltungselektronik, weiße Ware, braune Ware, aufgrund der guten Wärmebeständigkeit auch rote Ware) sowie der Straßenverkehr (Straßenbeschilderung und dergleichen).

Beispiele

Messmethoden:

Feststoffgehalt (Messmethode A1):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

K-Wert (nach FIKENTSCHER) (Messmethode A2):

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatographie GPC (Messmethode A3):

Die Angaben des gewichtsmittleren Molekulargewichtes $M_w$ und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm · 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Dichtebestimmung über den Masseauftrag und die Schichtdicke (Messmethode A4):

Das Raumgewicht beziehungsweise die Dichte $\rho$ einer beschichteten Selbstklebemasse wird über das Verhältnis von Flächengewicht zu jeweiliger Schichtdicke bestimmt:

$$\rho = \frac{m}{V} = \frac{MA}{d} \qquad\qquad [\rho] = \frac{[kg]}{[m^2]\cdot[m]} = \left[\frac{kg}{m^3}\right]$$

MA = Masseauftrag/Flächengewicht (ohne Linergewicht) in [kg/m$^2$]

d =        Schichtdicke (ohne Linerdicke) in [m]

Bei diesem Verfahren wird die Rohdichte erhalten.

Diese Dichtebestimmung eignet sich insbesondere zur Bestimmung der Gesamtdichte fertiger, auch mehrschichtiger, Produkte.

90° Klebkraft Stahl - offene und abgedeckte Seite (Messmethode M1):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wurde vor der Messung gereinigt und konditioniert.

Dazu wurde die Platte zunächst mit Aceton abgewischt und danach 5 Minuten an der Luft liegen gelassen, damit das Lösungsmittel abdampfen konnte.

Die dem Prüfuntergrund abgewandte Seite des Dreischichtverbundes wurde dann mit einer 50 $\mu$m Alumini-umfolie abgedeckt, wodurch verhindert wurde, dass sich das Muster bei der Messung dehnt. Danach erfolgte das Anrollen des Prüfmusters auf den Stahluntergrund. Hierzu wurde das Tape mit einer 2 kg Rolle bei einer Aufrollgeschwindigkeit von 10 m/min fünfmal hin und her überrollt. Unmittelbar nach dem Anrollen wurde die Stahlplatte in eine spezielle Halterung geschoben, die es ermöglicht, das Muster in einem Winkel von 90° nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 $\mu$m Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit - offene und abgedeckte Seite (Messmethode M2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche betrug 20 mm · 13 mm (Länge · Breite). Vor der Messung wurde die Stahlplatte gereinigt und konditioniert. Dazu wurde die Platte zunächst mit Aceton abgewischt und danach 5 Minuten an der Luft liegen gelassen, damit das Lösungsmittel abdampfen konnte. Nach dem Verkleben wurde die offene Seite mit einer 50 $\mu$m - Aluminiumfolie verstärkt und mit einer 2 kg Rolle zweimal hin und her überrollt. Anschließend wurde eine Gurtschlaufe am überstehenden Ende des Dreischichtverbundes angebracht. Das Gebilde wurde dann an einer geeigneten Vorrichtung aufgehängt und mit einem bestimmten Gewicht belastet; das Gewicht ist jeweils in den Beispielen angegeben. Die Aufhängvorrichtung war so beschaffen, dass das Gewicht die Probe in einem Winkel von 179° +/- 1 ° belastete. Dadurch war sichergestellt, dass sich der Dreischichtverbund nicht von der Plattenunterkante abschälen konnte. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 $\mu$m Aluminiumfolie verstärkt, das Trennmaterial entfernt und auf die Prüfplatte analog der Beschreibung geklebt. Die Messung wurde bei Normalklima (23 °C, 55 % Luftfeuchtigkeit) durchgeführt.

Name-Plate-Test (NPT) (Messmethode M3):

Ein 2 cm breiter, 15 cm langer und 0,5 mm dicker Aluminium-Teststreifen wird mit Aceton gewaschen und bei einem Klima von 23 °C +/- 1 °C Temperatur und 50 % +/- 5 % rel. Luftfeuchte 5 min liegen gelassen. Der Aluminium-Streifen wird anschließend längs auf das Klebebandmuster aufgebracht. Anschließend wird überstehendes Klebeband abgeschnitten, so dass es bündig mit der Aluminium-Platte abschließt. Eine 20 cm lange, 2,5 cm breite und 3 mm dicke Polycarbonat-Platte (PC-Platte) wird mit Ethanol gewaschen und bei einem Klima von 23 °C +/- 1 °C Temperatur und 50 % +/- 5 % rel. Luftfeuchte 120 min liegen gelassen. Der Verbund aus der Aluminium-Platte und dem Klebeband wird mittig auf der PC-Platte verklebt und somit das Prüfmuster hergestellt. Durch fünfmaliges doppeltes Überrollen mittels einer 4 kg-Rolle und anschließendes Liegenlassen für 72h wird für eine definierte Verklebung gesorgt.

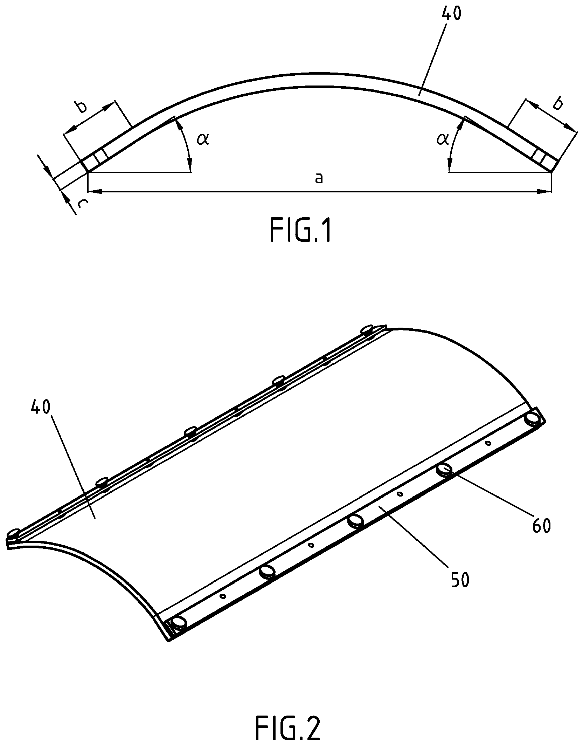

Die PC-Platte mit dem darauf verklebten Verbund aus Klebebandmuster und Aluminium-Streifen wird in ein 33°-NPT-Gestell gespannt, dessen Aufbau in den Figuren 1 und 2 dargestellt ist. Figur 1 zeigt einen Querschnitt des Gestells, das über eine gekrümmte Metallplatte 40 verfügt. Die mit a, b und c bezeichneten Dimensionen haben folgende Bedeutung:

a = 211 mm;

b = 28 mm;

c = 6 mm.

Die Größe des Winkels α beträgt 33 °.

Wie Figur 2 zusätzlich verdeutlicht, weist das Gestell im Wesentlichen neben der gebogenen Metallplatte 40 seitlich angebrachte Fixierungsschienen 50 sowie Stellschrauben 60 auf.

Die PC-Platte wird nun in Querrichtung so in das Gestell eingespannt, dass ihre Enden mit der Fixierungsschiene bündig auf dem Gestell fixiert werden und die verklebte Aluminiumplatte sichtbar nach oben gerichtet ohne Fixierung vorliegt. Das Gestell wird in einem Ofen bei 50°C eingelagert. Nach 1, 24 und 48 h werden jeweils der Abstand beider Enden des Aluminium-Teststreifens im 90°-Winkel zu der PC-Platte gemessen. Das Messergebnis ist die Summe beider gemessener Abstände und wird in mm angegeben. Es wird eine Doppelbestimmung durchgeführt und der Durchschnitt berechnet.

Die Messergebnisse werden wie folgt interpretiert:

$\leq$ 5 mm: vorteilhaft

< 10 mm: befriedigend

10 - 16 mm: noch ausreichend

$\geq$ 17 mm: nicht ausreichend.

Kommerziell erhältliche, eingesetzte Chemikalien

| Chemische Verbindung | Handelsname | Hersteller | CAS-Nr. |
|---|---|---|---|
| Bis-(4-tert-butylcyclohexyl)peroxydicarbonat | Perkadox® 16 | Akzo Nobel | 15520-11-3 |
| 2,2'-Azobis(2-methylpropionitril), AIBN | Vazo@ 64 | DuPont | 78-67-1 |
| Acrylsäure AS | - | Sigma-Aldrich | 79-10-7 |
| Butylacrylat BA | - | BASF | 141-32-2 |
| 2-Ethylhexylacrylat EHA | - | BASF | 103-11-7 |
| 2-Propylheptylacrylat PHA | - | BASF | 149021-58-9 |
| Isobornylacrylat IBOA | Visiomer® IBOA | Evonik | 5888-33-5 |
| Pentaerythrittetraglycidether | D.E.R.™ 749 | DOW | 3126-63-4 |
| 3,4-Epoxycyclohexylmethyl-3,4-epoxycyclohexancarboxylat | Uvacure® 1500 | Cytec Industries Inc. | 2386-87-0 |
| N,N,N',N'-Tetrakis(2,3-epoxypropyl)cyclohexan-1,3-dimethylamin | Syna-Epoxy S610 | Synasia | 65992-66-7 |
| Tetraglycidyl-meta-xyloldiamin | Erisys™ GA-240 | CVC | 63738-22-7 |
| Aluminium-acetylacetonat | - | Sigma-Aldrich | 13963-57-0 |
| 3-Glycidyloxypropyltriethoxysilan | Dynasylan® GLYEO | Evonik | 2602-34-8 |
| Isophorondiamin | Vestamin® IPD | Evonik | 2855-13-2 |
| 3-Aminopropyltriethoxysilan | Dynasylan® AMEO | Evonik | 919-30-2 |
| Resorcinol bis(diphenyl Phosphat) | Reofos® RDP | Chemtura | 57583-54-7 |
| Mikroballons (MB) (trocken-unexpandierte Mikrosphären, Durchmesser 9 - 15 $\mu$m, Expansions-Starttemperatur 106 - 111 °C, TMA-Dichte $\leq$ 25 kg/m$^3$) | Expancel®051 DU 40 | Expancel Nobel Industries | |

## I. Herstellung der Haftklebemassen PA1 bis PA4

Im Folgenden wird die Präparation der Ausgangspolymere beschrieben. Die untersuchten Polymere werden konventionell über eine freie radikalische Polymerisation in Lösung hergestellt.

Polyacrylathaftkleber 1 (PA1):

Ein für radikalische Polymerisationen konventioneller 300 L-Reaktor wurde mit 11,0 kg Acrylsäure, 27,0 kg Butylacrylat (BA), 62,0 kg 2-Ethylhexylacrylat (EHA) sowie 72,4 kg Aceton/ Isopropanol (94:6) befüllt. Nach 45minütiger Durchleitung von Stickstoffgas unter Rühren wurde der Reaktor auf 58 °C hochgeheizt und 50 g Vazo@ 67 hinzugegeben. Anschließend wurde das äußere Heizbad auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Aceton/ Isopropanol (94:6) und nach 6 h mit 10,0 kg Aceton/ Isopropanol (94:6) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer abgemischt, auf einen Feststoffgehalt von 30 % mit Aceton verdünnt und dann aus Lösung auf eine silikonisierte Trennfolie (50 $\mu$m Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 50 g/m$^2$. Molmassen mittels GPC (Messmethode A3): $M_n$ = 28.000 g/mol; $M_w$ = 1.050.000 g/mol. K-Wert: 50,5.

Polyacrylathaftkleber 2 (PA2):

Ein für radikalische Polymerisationen konventioneller 100 L-Glasreaktor wurde mit 4,0 kg Acrylsäure, 12,0 kg BA, 24,0 kg 2-Propylheptylacrylat PHA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Perkadox® 16 hinzugegeben. Die Reaktion wurde nach 24 h Reaktionszeit abgebrochen und auf Raumtemperatur abgekühlt. Anschließend wurde das Polyacrylat mit dem Vernetzer abgemischt, auf einen Feststoffgehalt von 30 % mit Aceton verdünnt und dann analog PA 1 beschichtet und getrocknet. Der Masseauftrag betrug 50 g/m$^2$. Molmassen mittels GPC (Messmethode A3): $M_n$ = 25.700 g/mol; $M_w$ = 891.000 g/mol. K-Wert: 49,8.

Polyacrylathaftkleber 3 (PA3):

Ein für radikalische Polymerisationen konventioneller 100 L-Glasreaktor wurde mit 3,2 kg Acrylsäure, 4,8 kg Isobornylacrylat (IBOA), 17,0 kg EHA, 15,0 kg BA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)-peroxydicarbonat hinzugegeben. Die Reaktion wurde nach 24 h Reaktionszeit abgebrochen und auf Raumtemperatur abgekühlt. Anschließend wurde das Polyacrylat mit dem Vernetzer abgemischt, auf einen Feststoffgehalt von 30 % mit Aceton verdünnt und dann analog PA 1 beschichtet und getrocknet. Der Masseauftrag betrug 50 g/m$^2$. Molmassen mittels GPC (Messmethode A3): $M_n$ = 25.100 g/mol; $M_w$ = 1.080.000 g/mol. K-Wert: 51,1.

Polyacrylathaftkleber 4 (PA4):

Ein für radikalische Polymerisationen konventioneller 100 L-Glasreaktor wurde mit 4,0 kg Acrylsäure, 18,0 kg EHA, 18,0 kg BA und 26,7 kg Aceton/ Benzin 60/95 (1:1) befüllt. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)-peroxydicarbonat hinzugegeben. Die Reaktion wurde nach 24 h Reaktionszeit abgebrochen und auf Raumtemperatur abgekühlt. Anschließend wurde das Polyacrylat mit dem Vernetzer abgemischt, auf einen Feststoffgehalt von 30 % mit Aceton verdünnt und dann analog PA 1 beschichtet und getrocknet. Der Masseauftrag betrug 50 g/m$^2$. Molmassen

mittels GPC (Messmethode A3): $M_n$ = 21.000 g/mol; $M_w$ = 1.050.000 g/mol. K-Wert: 50,0.

In Tabelle 1 ist die Zusammensetzung der erfindungsgemäßen Beispiele B1 - B6 als auch der Vergleichsbeispiele VB7 - VB11 aufgeführt.

**Tabelle 1:** Beispiele B1 - B6, B11, B12 sowie Vergleichsbeispiele VB7 - VB10

| Bsp. | PA | Kovalenter Vernetzer [Gew.-%] | Koordinativer Vernetzer [Gew.%] | $n_{kov}$ [mmol/g Pol.][1] | $n_{koord}$ [mmol/g Pol.][1] | Verhältnis $n_{kov}/n_{koord}$ [-] |
|---|---|---|---|---|---|---|
| B1 | PA1 | 0,035 Erisys | 0,140 Al-Chelat[2] | 3,17 | 0,66 | 4,8 |
| B2 | PA1 | 0,030 S610 | 0,085 Al-Chelat | 3,22 | 0,40 | 8,1 |
| B3 | PA2 | 0,042 S610 | 0,155 Al-Chelat | 4,51 | 0,73 | 6,2 |
| B4 | PA3 | 0,035 Erisys | 0,125 Al-Chelat | 3,17 | 0,59 | 5,4 |
| B5 | PA4 | 0,030 Erisys | 0,125 Al-Chelat | 2,72 | 0,59 | 4,6 |
| B6 | PA1 | 0,220 Uvacure | 0,053 Al-Chelat | 1,21 | 0,25 | 4,8 |
| VB7 | PA1 | 0,035 Erisys | - | 3,17 | - | - |
| VB8 | PA1 | 0,042 Erisys | - | 3,83 | - | - |
| VB9 | PA1 | - | 0,140 Al-Chelat | - | 0,66 | - |
| VB10 | PA1 | - | 0,812 Al-Chelat | - | 3,83 | - |
| B11 | PA2 | 0,030 Erisys | 0,200 Al-Chelat | 2,72 | 0,94 | 2,9 |
| B12 | PA3 | 0,220 Uvacure | 0,028 Al-Chelat | 1,21 | 0,13 | 9,3 |

[1] mmol funktionelle Gruppen des kovalenten Vernetzers bzw. Bindungsstellen des koordinativen Vernetzers pro g Polymer

[2] Al-Chelat = Aluminium-acetylacetonat

**II Herstellung der Ausgangspolymere für die Polvacrvlatschäume VT1 und VT2 sowie der Haftklebebandbeispiele MT1 bis MT14**

Im Folgenden wird die Präparation des Ausgangspolymers beschrieben, welches konventionell über eine freie radikalische Polymerisation in Lösung hergestellt wurde.

Basispplymer P1

Ein für radikalische Polymerisationen konventioneller Reaktor wurde mit 3,0 kg Acrylsäure, 30,0 kg EHA, 67,0 kg BA und 66 kg Aceton/Isopropanol (96:4) befüllt. Nach 45minütiger Durchleitung von Stickstoffgas unter Rühren wurde der Reaktor auf 58 °C hochgeheizt und 50 g Vazo@ 67 hinzugegeben. Anschließend wurde das äußere Heizbad auf 75 °C erwärmt und die Reaktion konstant bei dieser Außentemperatur durchgeführt. Nach 1 h wurden erneut 50 g Vazo@ 67 zugegeben und nach 4 h wurde mit 20 kg Aceton/Isopropanol-Gemisch (96:4) verdünnt. Nach 5 sowie nach 7 h wurde jeweils mit 150 g Perkadox® 16 nachinitiiert und mit 23 kg Aceton/Isopropanol-Gemisch (96:4) verdünnt. Nach 22 h Reaktionszeit wurde die Polymerisation abgebrochen und auf Raumtemperatur abgekühlt. Das Polyacrylat hat einen K-Wert von 75,1, einen Feststoffgehalt von 50,2 % und mittlere Molekulargewichte von $M_n$ = 91.900 g/mol und $M_w$ = 1.480.000 g/mol.

Basispplymer P2

Ein für radikalische Polymerisationen konventioneller Reaktor wurde mit 10,0 kg Acrylsäure, 45,0 kg EHA, 45,0 kg BA und 66 kg Aceton/Isopropanol (94:6) befüllt. Nach 45minütiger Durchleitung von Stickstoffgas unter Rühren wurde der Reaktor auf 58 °C hochgeheizt und 50 g Vazo® 67 hinzugegeben. Anschließend wurde das äußere Heizbad auf 75 °C erwärmt und die Reaktion konstant bei dieser Außentemperatur durchgeführt. Nach 1 h wurden erneut 50 g Vazo® 67 zugegeben und nach 4 h wurde mit 25 kg Aceton/Isopropanol-Gemisch (94:6) verdünnt. Nach 5 sowie nach 7 h wurde jeweils mit 150 g Perkadox® 16 nachinitiiert und mit 23 kg Aceton/Isopropanol-Gemisch (94:6) verdünnt. Nach 22 h Reaktionszeit wurde die Polymerisation abgebrochen und auf Raumtemperatur abgekühlt. Das Polyacrylat hat einen K-Wert von 49,1, einen Feststoffgehalt von 49,5 % und mittlere Molekulargewichte von $M_n$ = 21.900 g/mol und $M_w$ = 890.000 g/mol.

Verfahren 1: Aufkonzentration / Herstellung der Schmelzhaftkleber:

Das Basispolymer P wurde mittels Einschneckenextruder (Aufkonzentrationsextruder, Berstorff GmbH, Deutschland) weitestgehend vom Lösemittel befreit (Restlösemittelgehalt ≤ 0,3 Gew.-%). Die Parameter der Aufkonzentration des Basispolymers waren wie folgt; die Drehzahl der Schnecke betrug 150 U/min, der Motorstrom 15 A und es wurde ein Durchsatz von 58,0 kg/h flüssig realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts P lag bei ca. 115 °C. Der Feststoffgehalt betrug nach diesem Aufkonzentrationsschritt 99,8%.

Verfahren 2: Herstellung der erfindungsgemäßen Klebebänder, Abmischung mit dem Vernetzer-Beschleuniger-Svstem für die thermische Vernetzung und Beschichtung

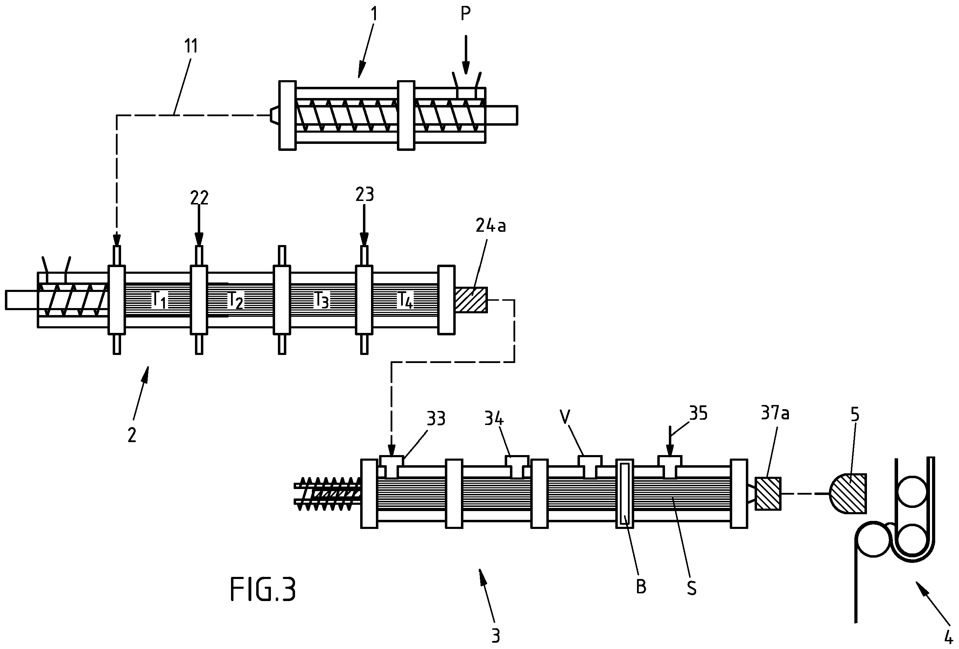

Die Schäumung findet in einer Versuchsanlage statt, die der Darstellung in Fig. 3 entspricht.
Das aufkonzentrierte Basispolymer P wird gemäß Verfahren 1 in einem Fütterextruder 1 aufgeschmolzen und mit diesem als Polymerschmelze über einen beheizbaren Schlauch 11 in einen Planetwalzenextruder 2 (PWE) der Firma ENTEX (Bochum) gefördert (es wurde insbesondere ein PWE mit vier unabhängig voneinander heizbaren Modulen T1, T2, T3, T4 eingesetzt). Über die Dosieröffnung 22 besteht die Möglichkeit, zusätzliche Additive oder Füllstoffe, wie z.B. Farbpasten, zuzuführen. An Punkt 23 wird der Vernetzer hinzugefügt. Alle Komponenten werden zu einer homogenen Polymerschmelze gemischt.
Mittels einer Schmelzepumpe 24a wird die Polymerschmelze in einen Doppelschneckenextruder 3 (Firma BERSTORFF) überführt (Eingabeposition 33). An Position 34 wird die Beschleunigerkomponente hinzugefügt. Anschließend wird die gesamte Mischung in einem Vakuumdom V bei einem Druck von 175 mbar von allen Gaseinschlüssen befreit (Kriterium für Gasfreiheit siehe oben). Im Anschluss an die Vakuumzone befindet sich auf der Schnecke ein Blister B, welcher einen Druckaufbau in dem darauf folgenden Segment S ermöglicht. Durch geeignete Steuerung der Extruderdrehzahl und der Schmelzepumpe 37a wird in dem Segment S zwischen Blister B und Schmelzepumpe 37a ein Druck von größer 8 bar aufgebaut, an der Dosierstelle 35 die Mikroballonmischung (Mikroballons eingebettet in das Dispergierhilfsmittel gemäß den Angaben in Tabelle 2) hinzugefügt und mittels eines Mischelements homogen in die Vormischung eingearbeitet. Die entstandene Schmelzmischung wird in eine Düse 5 überführt.
Nach Verlassen der Düse 5, also nach Druckabfall, expandieren die eingearbeiteten Mikroballons, wobei durch den Druckabfall eine scherungsarme, insbesondere scherungsfreie, Abkühlung der Polymermasse erfolgt. Es entsteht eine geschäumte Haftklebmasse, welche anschließend zwischen zwei Trennmaterialien, welche nach dem Entfernen wiederverwendet werden können (Prozessliner) beschichtet und mittels eines Walzenkalanders 4 bahnförmig ausgeformt wird.
Um die Verankerung der Haftklebemassen aus den Beispielen und Vergleichsbeispielen auf dem ausgeformten Polyacrylatschaum zu verbessern, wurden sowohl die Haftklebemassen als auch der Schaum Corona-vorbehandelt (Corona-Anlage der Firma VITAPHONE, Dänemark, 70 W·min/m²). Diese Behandlung führte nach der Herstellung des Dreischichtverbundes zu einer verbesserten chemischen Anbindung an die Polyacrylatschaumträgerschicht.
Die Bahngeschwindigkeit bei Durchlaufen der Beschichtungsanlage betrug 30 m/min.
Nach Verlassen des Walzenspaltes wurde ggf. ein anti-adhäsiver Träger ausgedeckt und das fertige Dreischichtprodukt mit dem verbleibenden zweiten anti-adhäsiven Träger aufgewickelt.

**Tabelle 2:** Polyacrylatschäume VT1 und VT2

| VT1 | | | | | |
|---|---|---|---|---|---|
| Komponenten | Basispolymer P1 Expancel 051 DU 40 Polypox R16 IPDA Reofos RDP | | [Gew.-%] | | 97,8 1,5 0,139 0,144 0,41 |
| Aufbau | Dicke Dichte | | [$\mu$m] [kg/m$^3$] | | 902 749 |
| VT2 | | | | | |
| Komponenten | Basispolymer P1 Expancel 051 DU 40 GLYEO AMEO Reofos RDP | | [Gew.-%] | | 97,9 1,2 0,197 0,315 0,41 |
| Aufbau | Dicke Dichte | | [$\mu$m] [kg/m$^3$] | | 908 851 |
| Dichte: Messmethode A4 | | | | | |

Im Folgenden werden konkrete Beispiele zur Herstellung der erfindungsgemäßen Klebebänder umfassend die Polyacrylatschaumträger VT1 und VT2 mit den erfindungsgemäßen Haftklebemassebeispielen B1 - B6 und B11 - B12 mit einem beidseitigen Masseauftrag von 50 g/m$^2$ und Vergleichsbeispiele umfassend die Polyacrylatschaumträger VT1 und VT2 mit den nicht erfindungsgemäßen Haftklebemassebeispielen VB7 - VB10, ebenfalls mit einem beidseitigen Masseauftrag von 50 g/m$^2$, vorgestellt.

**Tabelle 3:** Klebkräfte auf Stahl und ABS sowie das Aufziehverhalten der dreischichtigen Haftklebebänder MT1 - MT14 umfassend die Polyacrylatschaumträger VT1 oder VT2 mit Gesamtdicken von 1000 $\mu$m

| Bsp. | PSA beidseitig | VT | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft ABS 3d, [N/cm] |
|---|---|---|---|---|---|---|---|---|
| | | | offene Seite | abgedeckte Seite | offene Seite | offene Seite | offene Seite | offene Seite |
| MT1 | B1 | 1 | 18,7 | 18,5 | 44 | 54 f.s. | 55 f.s. | 36,1 |
| MT2 | B2 | 1 | 16,3 | 15,1 | 44 | 54 f.s. | 56 f.s. | 38,3 |
| MT3 | B3 | 1 | 15,2 | 15,5 | 37 | 54 f.s. | 56 f.s. | 35,2 |
| MT4 | B4 | 1 | 15,2 | 15,9 | 36 | 45 f.s. | 47 f.s. | 39,4 |
| MT5 | B5 | 1 | 11,2 | 12,3 | 34 | 45 f.s. | 45 f.s. | 32,1 |
| MT6 | B6 | 1 | 16,2 | 16,1 | 42 | 44 f.s. | 44 f.s. | 32,6 |
| MT7 | B1 | 2 | 18,7 | 18,5 | 44 | 54 f.s. | 55 f.s. | 36,6 |
| MT8 (Vgl.) | VB7 | 1 | 10,4 | 10,5 | 28 | 44 | 49 f.s. | 24,3 |
| MT9 (Vgl.) | VB8 | 1 | 9,6 | 8,9 | 14 | 38 | 44 | 18,3 |
| MT10 (Vgl.) | VB9 | 1 | 12,2 | 12,2 | 45 | 47 f.s. | 48 f.s. | 29,3 |

(fortgesetzt)

| Bsp. | PSA beidseitig | VT | Klebkraft Stahl sofort, [N/cm] | | Klebkraft Stahl 8h, [N/cm] | Klebkraft Stahl 1d, [N/cm] | Klebkraft Stahl 3d, [N/cm] | Klebkraft ABS 3d, [N/cm] |
|---|---|---|---|---|---|---|---|---|
| | | | offene Seite | abgedeckte Seite | offene Seite | offene Seite | offene Seite | offene Seite |
| MT11 (Vgl.) | VB10 | 1 | 9,2 | 9,1 | 16 | 23 | 25 | 10,2 |
| MT12 | B11 | 1 | 13,7 | 13,7 | 47 | 50 f.s. | 50 f.s. | 34,2 |
| MT13 | B11 | 2 | 11,8 | 11,9 | 56 | 55 f.s. | 54 f.s. | 34,4 |
| MT14 | B12 | 1 | 15,8 | 15,9 | 25 | 36 | 37 | 28,1 |
| Vgl. = Vergleichsbeispiel, PSA = Haftklebmasse, VT = Schaumträger, f.s. = foam split, Schaumspalten | | | | | | | | |

Anhand der Klebkraftmessungen in Tabelle 3 ist zu erkennen, dass die erfindungsgemäßen Haftklebebänder sehr schnell auf Stahl aufziehen und ihre maximale Klebkraft erreichen bzw. es zum Spalten des Polyacrylatschaumträgers kommt. Des Weiteren zeigen alle Beispiele ebenfalls gute Klebkräfte auf ABS.

Wird hingegen nur ein kovalenter oder ein koordinativer Vernetzer verwendet, dauert es häufig länger, bis die Klebkräfte im Gleichgewichtszustand erreicht sind und die Klebkräfte auf ABS sind etwas niedriger. In Beispiel MT8 sind die Polymere und die Menge an kovalentem Vernetzer identisch mit Beispiel MT1; es zeigt sich, dass der Verzicht auf einen reversiblen, koordinativen Vernetzer das Aufziehverhalten verschlechtert. In Beispiel MT10 ist analog die Gesamtanzahl der Bindungsstellen des koordinativen Vernetzers vergleichbar mit Beispiel MT1; es ist zu erkennen, dass die Klebkräfte abnehmen. In den Beispielen MT12 - 14 ist das bevorzugte Verhältnis von kovalenten Gruppen zu den Bindungsstellen des koordinativen Vernetzers sowohl unter- als auch überschritten. Dies hat keine negative Auswirkung auf das Aufziehverhalten als auch das Klebkraftniveau.

**Tabelle 4:** Scherstandszeiten sowie Ergebnisse des Name-Plate-Test der dreischichtigen Haftklebebänder MT1 - MT14 mit Gesamtdicken von 1000 μm

| Bsp. | SSZ, 10 N, 23°C [Min] | SSZ, 10 N, 70°C [Min] | NPT, 1 h [mm] | NPT, 24 h [mm | NPT, 48 h [mm |
|---|---|---|---|---|---|
| MT1 | > 10.000 | > 10.000 | 0 | 3 | 3 |
| MT2 | > 10.000 | > 10.000 | 0 | 3 | 3 |
| MT3 | > 10.000 | > 10.000 | 1 | 3 | 3 |
| MT4 | > 10.000 | > 10.000 | 0 | 4 | 4 |
| MT5 | > 10.000 | > 10.000 | 0 | 3 | 3 |
| MT6 | > 10.000 | 8.900 (K) | 0 | 6 | 6 |
| MT7 | > 10.000 | > 10.000 | 0 | 5 | 5 |
| MT8 (Vgl.) | > 10.000 | > 10.000 | 15 | 25 | 30 |
| MT9 (Vgl.) | > 10.000 | > 10.000 | 18 | 30 | 36 |
| MT10 (Vgl.) | > 10.000 | 1.680 (K) | 5 | 8 | 9 |
| MT11 (Vgl.) | 2.000 (A) | 1.200 (A) | 6 | 33 | 37 |
| MT12 | > 10.000 | 7380 (K) | 2 | 12 | 16 |
| MT13 | > 10.000 | 7210 (K) | 10 | 13 | 14 |
| MT14 | > 10.000 | > 10.000 | 7 | 15 | 16 |
| SSZ = Scherstandszeiten 23° und 70°C = Messmethode M2, A: adhäsiver Fehler, K: kohäsiver Fehler; NPT = Name-Plate-Test = Messmethode M3 | | | | | |

Die Unterschiede zwischen den Haftklebebändern werden am besten im Name-Plate-Test (Tabelle 4) sichtbar. Hier ist zu erkennen, dass insbesondere die alleinige Verwendung eines kovalenten Vernetzers zu einem ausgeprägten Kantenabheben im Name-Plate-Test führt kann (MT8, MT9). Ein ähnliches Verhalten in schwächerem Ausmaß ist zu erkennen, wenn eine Kombination eines kovalenten und koordinativen Vernetzers im weniger bevorzugten Verhältnis der funktionellen Gruppen zu den Bindungsstellen verwendet wird (MT12 - MT14), wobei hier noch zusätzlich der Einfluss des geschäumten Trägers zu erkennen ist. Der aufgrund der höheren Acrylsäurekonzentration steifere Träger VT2 (MT13) führt zu einem schlechteren Initialwert nach 1 h verglichen mit dem etwas weicheren Träger VT1 (MT12). Wird hingegen nur ein koordinativer Vernetzer verwendet (MT10, MT11), so können Name-Plate-Test-Ergebnisse erzielt werden, die annähernd vergleichbar mit dem erfindungsgemäßen Vernetzersystem sind; jedoch ist die Wärmescherfestigkeit deutlich schlechter.

**Patentansprüche**

1. Klebeband, umfassend

   mindestens eine geschäumte Schicht und
   mindestens eine Haftklebmasseschicht, **dadurch gekennzeichnet, dass**
   auf beiden Seiten der geschäumten Schicht eine Haftklebmasseschicht angeordnet ist, wobei die Haftklebmasseschicht jeweils mindestens ein Poly(meth)acrylat enthält und das Poly(meth)acrylat mit mindestens einem kovalenten und mindestens einem koordinativen Vernetzer vernetzt ist; und
   beide Haftklebmasseschichten vollständig identisch sind.

2. Klebeband gemäß Anspruch 1, **dadurch gekennzeichnet, dass** der kovalente Vernetzer mindestens eine Verbindung enthaltend mindestens eine cyclische Etherfunktion umfasst.

3. Klebeband gemäß einem der vorstehenden Ansprüche, **dadurch gekennzeichnet, dass** der koordinative Vernetzer ausgewählt ist aus der Gruppe bestehend aus Titandipropoxidbis(acetylacetonat), Titandibutoxidbis(octylenglycolat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat), Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylacetoacetat, Aluminiumdisec-butoxidmonoethylacetoacetat, Aluminiumtriacetylacetonat, Aluminiummonoacetylacetonatbis(ethylacetoacetonat) und Zirkoniumtetraacetylacetonat.

4. Klebeband gemäß einem der vorstehenden Ansprüche, **dadurch gekennzeichnet, dass** das Verhältnis der eingesetzten Stoffmenge $n_{kov}$ der funktionellen Gruppen der kovalenten Vernetzer zur eingesetzten Stoffmenge $n_{koord}$ der Bindungsstellen der koordinativen Vernetzer 3 : 1 bis 9 : 1 beträgt.

**Claims**

1. Adhesive tape comprising

   at least one foamed layer and
   at least one pressure-sensitive adhesive layer, **characterized in that**
   a pressure-sensitive adhesive layer is disposed on both sides of the foamed layer, where the pressure-sensitive adhesive layer comprises in each case at least one poly(meth)acrylate and the poly(meth)acrylate is crosslinked with at least one covalent and at least one coordinative crosslinker; and
   both pressure-sensitive adhesive layers are completely identical.

2. Adhesive tape according to Claim 1, **characterized in that** the covalent crosslinker comprises at least one compound containing at least one cyclic ether function.

3. Adhesive tape according to either of the preceding claims, **characterized in that** the coordinative crosslinker is selected from the group consisting of titanium dipropoxide bis(acetylacetonate), titanium dibutoxide bis(octylene glycolate), titanium dipropoxide bis(ethyl acetoacetate), titanium dipropoxide bis(lactate), titanium dipropoxide bis(triethanolaminate), titanium di-n-butoxide bis(triethanolaminate), titanium tri-n-butoxide monostearate, butyl titanate dimer, poly(titanium acetylacetonate), aluminum diisopropoxide monoethyl acetate, aluminum di-n-butoxide monomethyl acetoacetate, aluminum diisobutoxide monomethyl acetoacetate, aluminum di-n-butoxide monoethyl acetoacetate, aluminum di-sec-butoxide monoethyl acetoacetate, aluminum triacetylacetonate, aluminum monoacetylacetonate bis(ethyl acetoacetate), and zirconium tetraacetylacetonate.

4. Adhesive tape according to any of the preceding claims, **characterized in that** the ratio of the amount of substance $n_{cov}$ used of the functional groups of the covalent crosslinkers to the amount of substance $n_{coord}$ used of the binding sites of the coordinative crosslinkers is 3:1 to 9:1.

**Revendications**

1. Ruban adhésif comprenant

   au moins une couche expansée et
   au moins une couche d'une masse adhésive de contact, **caractérisé en ce qu'**une couche de masse adhésive de contact est disposée sur les deux faces de la couche expansée, chaque couche de masse adhésive de contact contenant au moins un poly(méth)acrylate, et le poly(méth)acrylate étant réticulé à l'aide d'au moins un agent de réticulation par covalence et au moins un agent de réticulation par coordination, et les deux couches de masse adhésive de contact étant complètement identiques.

2. Ruban adhésif selon la revendication 1, **caractérisé en ce que** l'agent de réticulation par covalence comprend au moins un composé contenant au moins une fonction éther cyclique.

3. Ruban adhésif selon l'une des revendications précédentes, **caractérisé en ce que** l'agent de réticulation par coordination est choisi dans le groupe consistant en le dipropoxyde et bis(acétylacétonate) de titane, le dibutoxyde et bis(octylèneglycolate) de titane, le dipropoxyde et bis(éthylacétoacétate) de titane, le dipropoxyde et bis(lactate) de titane, le dipropoxyde et bis(triéthanolaminate) de titane, le di-n-butoxyde et bis(triéthanolaminate) de titane, le tri-n-butoxyde et monostéarate de titane, le titanate de butyle dimère, le poly(acétylacétonate de titane), le diisopropoxyde et monoéthylacétate d'aluminium, le di-n-butoxyde et monométhylacétoacétate d'aluminium, le di-iso-butoxyde et monométhylacétoacétate d'aluminium, le di-n-butoxyde et monoéthylacétoacétate d'aluminium, le disecbutoxyde et monoéthylacétoacétate d'aluminium, le triacétylacétonate d'aluminium, le monoacétylacétonate et bis(éthylacétoacétonate) d'aluminium et le tétraacétylacétonate de zirconium.

4. Ruban adhésif selon l'une des revendications précédentes, **caractérisé en ce que** le rapport de la quantité utilisée $n_{kov}$ des groupes fonctionnels de l'agent de réticulation par covalence à la quantité utilisée $n_{koord}$ des sites de liaison de l'agent de réticulation par coordination est de 3:1 à 9:1.

FIG.1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2305389 A2
- EP 2617789 A1
- WO 2013048985 A2
- WO 2013048945 A1
- US 20110244230 A1
- EP 2226372 A1
- WO 2017207119 A1
- EP 1802722 A1
- EP 2414143 A1
- DE 102009015233 A1

**In der Beschreibung aufgeführte Nicht-Patentliteratur**

- **F. R. SCHWARZL.** Polymermechanik: Struktur und mechanisches Verhalten von Polymeren. Springer Verlag, 1990
- *CHEMICAL ABSTRACTS,* 15520-11-3
- *CHEMICAL ABSTRACTS,* 78-67-1
- *CHEMICAL ABSTRACTS,* 79-10-7
- *CHEMICAL ABSTRACTS,* 141-32-2
- *CHEMICAL ABSTRACTS,* 103-11-7
- *CHEMICAL ABSTRACTS,* 149021-58-9
- *CHEMICAL ABSTRACTS,* 5888-33-5
- *CHEMICAL ABSTRACTS,* 3126-63-4
- *CHEMICAL ABSTRACTS,* 2386-87-0
- *CHEMICAL ABSTRACTS,* 65992-66-7
- *CHEMICAL ABSTRACTS,* 63738-22-7
- *CHEMICAL ABSTRACTS,* 13963-57-0
- *CHEMICAL ABSTRACTS,* 2602-34-8
- *CHEMICAL ABSTRACTS,* 2855-13-2
- *CHEMICAL ABSTRACTS,* 919-30-2
- *CHEMICAL ABSTRACTS,* 57583-54-7